(19) Europäisches Patentamt / European Patent Office / Office européen des brevets

(11) **EP 2 391 135 B1**

(12) **EUROPEAN PATENT SPECIFICATION**

(45) Date of publication and mention
of the grant of the patent:
**13.03.2019 Bulletin 2019/11**

(21) Application number: **10733223.1**

(22) Date of filing: **20.01.2010**

(51) Int Cl.:
***H04N 13/128*** (2018.01)

(86) International application number:
**PCT/CN2010/070265**

(87) International publication number:
**WO 2010/083750 (29.07.2010 Gazette 2010/30)**

(54) **METHOD AND DEVICE FOR PROCESSING DEPTH IMAGE SEQUENCE**

VERFAHREN UND VORRICHTUNG ZUR VERARBEITUNG VON TIEFENBILDSEQUENZEN

PROCÉDÉ ET DISPOSITIF DE TRAITEMENT DE SÉQUENCE D'IMAGES DE PROFONDEUR

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **23.01.2009 CN 200910096035**

(43) Date of publication of application:
**30.11.2011 Bulletin 2011/48**

(73) Proprietor: **Huawei Technologies Co., Ltd.**
**Longgang District**
**Shenzhen, Guangdong 518129 (CN)**

(72) Inventors:
• **XIONG, Lianhuan**
  **Shenzhen**
  **Guangdong 518129 (CN)**
• **YU, Lou**
  **Shenzhen**
  **Guangdong 518129 (CN)**

(74) Representative: **Isarpatent**
**Patent- und Rechtsanwälte Behnisch Barth Charles**
**Hassa Peckmann & Partner mbB**
**Postfach 44 01 51**
**80750 München (DE)**

(56) References cited:
WO-A1-2008/080156      WO-A2-00/77734
CN-A- 101 282 492       CN-A- 101 521 829
CN-A- 101 521 829       KR-A- 20090 008 808

• HEWAGE C T E R ET AL: "A Novel Frame Concealment Method for Depth Maps Using Corresponding Colour Motion Vectors", 3DTV CONFERENCE: THE TRUE VISION - CAPTURE, TRANSMISSION AND DISPLAY OF 3D VIDEO, 2008, IEEE, PISCATAWAY, NJ, USA, 28 May 2008 (2008-05-28), pages 149-152, XP031275233, ISBN: 978-1-4244-1760-5
• HEWAGE C T E R ET AL: "Frame concealment algorithm for stereoscopic video using motion vector sharing", MULTIMEDIA AND EXPO, 2008 IEEE INTERNATIONAL CONFERENCE ON, IEEE, PISCATAWAY, NJ, USA, 23 June 2008 (2008-06-23), pages 485-488, XP031312764, ISBN: 978-1-4244-2570-9

**Description**

**FIELD OF THE INVENTION**

The present invention relates to the field of video image processing technologies, and in particular, to a method and a device for processing a depth image sequence.

**BACKGROUND OF THE INVENTION**

A texture sequence is a two-dimensional image sequence obtained by a camera currently. The obtaining of the texture sequence is a process of projecting a three-dimensional (3D) real world onto an image plane. In such process, the third dimensional information is abandoned, so that all the information of a corresponding 3D scenario cannot be obtained merely in dependence on the texture sequence.

In order to fully express the 3D scenario, a depth sequence corresponding to the texture sequence needs to be introduced, so as to indicate the third dimensional information. Generally, the resolution of each frame of the depth sequence is consistent with or is lower than that of the texture sequence, and adopts the format of a gray scale image, in which a gray scale value of each pixel point characterizes a depth of the point on the corresponding texture image. By using the texture sequence and the corresponding depth sequence, together with necessary camera parameters, the 3D scenario can be expressed.

The 3D perception generated by human eyes is mainly based on two aspects, that is, the binocular parallax and the motion parallax. If a left eye and a right eye are enabled to see images of different parallaxes by using a device, an accurate 3D object and a location of the object in a scenario will be generated in the human brain, which is the 3D perception with depth. In order to achieve the effect, a pair or multiple pairs of texture and depth sequences need to be used to generate corresponding monocular images. Studies show that, the overall quality of the 3D perception and the 3D image depends on monocular images with high quality.

The quality of the depth sequence may influence the quality of a virtual visual image (that is, the required monocular image) generated in 3D television (3DTV), so that the final subjective quality is limited.

Secondly, after being obtained, both depth sequences for generating 3DTV and depth sequences for remote surveying and mapping need to be encoded for transmission in a channel.

For example, the documents of Hewage, C.T.E.R. et al.: "A Novel Frame Concealment Method for Depth Maps Using Corresponding Colour Motion Vectors", 3dtv conference, IEEE, USA, 2008, p. 149-152 and Hewage, C.T.E.R. et al.: "Frame concealment algorithm for stereoscopic video using motion vector sharing", Multimedia and Expo, IEEE, USA, 2008, p. 485-488 disclose a motion correction method of colour and depth map iamge sequences to restore the lost depth frames. In particular, the missing depth frames are concealed using the motion information of the correctly received colour video frame.

The document of Hewage, C.T.E.R. et al.: "A Novel Frame Concealment Method for Depth Maps Using Corresponding Colour Motion Vectors", 3dtv conference, IEEE, USA, 2008, p. 149-152 discloses if a depth video frame is missing due to packet losses, the MVs of correctly received corresponding colour video frame are used as the candidate MVs for the current depth map frame. The recovered MVs from the corresponding colour frame are used to predict the missing depth frame at the enhancemenr layer decoder. The proposed method recovers the missing frame with accurate motion information.

In the implementation of the present invention, the inventors find that the prior art at least has the following problems.

The quality of the depth sequence in the prior art is poor, and the time-domain consistency is not good enough, so that the quality of the generated virtual visual image is poor, which is manifested as jitter in a stationary region; and as a result, the prediction residual and the bit rate are increased in encoding.

**SUMMARY OF THE INVENTION**

Embodiments of the present invention provide a method and a device for processing a depth image sequence, so as to improve the correlation of a depth sequence.

The present invention is defined in the appended claims. Enabling disclosure for the invention is found in embodiments 3-11. The remaining embodiments are to be understood as examples which do not describe parts of the present invention.

In the embodiments of the present invention, the correlation between the texture sequence and the depth sequence and the time correlation of the texture sequence are utilized for processing, thereby improving the correlation of the depth sequence, so as to enhance the quality of a generated virtual visual image and the efficiency of compression encoding of the depth sequence. The embodiments of the present invention may also be applied in other scenarios requiring the depth sequence.

## BRIEF DESCRIPTION OF THE DRAWINGS

To make the technical solutions of the present invention more comprehensible, the accompanying drawings required to be used in the descriptions of the embodiments and the prior art are simply described below. Apparently, the accompanying drawings described below merely demonstrate some of the embodiments of the present invention. Based on the accompanying drawings, persons of ordinary skill in the art may obtain other accompanying drawings without making creative efforts.

FIG. 1 is a first schematic diagram of a method for processing a depth image sequence according to the present invention;

FIG. 2 is a second schematic diagram of a method for processing a depth image sequence according to the present invention;

FIG. 3 is a third schematic diagram of a method for processing a depth image sequence according to the present invention;

FIG. 4 is a fourth schematic diagram of a method for processing a depth image sequence according to the present invention;

FIG. 5 is a fifth schematic diagram of a method for processing a depth image sequence according to the present invention;

FIG. 6 is a first schematic structural diagram of a device for processing a depth image sequence according to the present invention;

FIG. 7 is a second schematic structural diagram of a device for processing a depth image sequence according to the present invention;

FIG. 8 is a third schematic structural diagram of a device for processing a depth image sequence according to the present invention; and

FIG. 9 is a fourth schematic structural diagram of a device for processing a depth image sequence according to the present invention.

## DETAILED DESCRIPTION OF THE EMBODIMENTS

The technical solutions of the present invention will be clearly described in the following with reference to the accompanying drawings. It is obvious that the embodiments to be described are only a part rather than all of the embodiments of the present invention. Persons of ordinary skill in the art can derive other embodiments based on the embodiments of the present invention without creative efforts.

In the embodiments of the present invention, a correlation exists between a depth sequence and a texture sequence. Generally, a texture sequence corresponding to a depth sequence or a depth sequence corresponding to a texture sequence means that the two sequences indicate the same objective entity, and information of the two sequences is corresponding to each other in the time domain and space domain (one-to-many or many-to-many situations may exist).

In an embodiment of the present invention, a method for processing a depth image sequence is provided, which includes: (1) analyzing images of m frames before a current time, n frames at the current time, and q frames after the current time in a texture sequence corresponding to a depth sequence image, and extracting characteristic values of relevant characteristics of the texture sequence; and (2) processing a depth image of the current frame according to the extracted characteristic values of the relevant characteristics of the texture sequence in combination with r frames before the current time and s frames after the current time in a depth sequence, so as to enhance the time-domain continuity of the depth image sequence, in which m=0, 1, 2, ...; n=0, 1, where n=1 indicates that the current frame is used, and n=0 indicates that the current frame is not used; q=0, 1, 2, ...; r=0, 1, 2, ...; s=0, 1, 2, ...; and the m, q, r, and s frames are continuous frames or discontinuous frames, where m+n+q≥2, and r+s≥1.

The current depth sequence may first use a flag f to indicate whether to adopt a method for for processing a depth image sequence for the depth sequence image.

The analyzing the texture sequence that reflects the same objective entity as the depth sequence image refers to analyzing motion information contained in the texture sequence to serve as characteristics of the texture sequence, and the characteristic values of the characteristics may be, for example, edges of a moving object, magnitudes of motion vectors, and directions of the motion vectors.

The motion information of the texture sequence may reflect the movement status of an image in a corresponding region, and whether to process the depth image sequence is determined according to the movement status, that is, according to the characteristic values obtained by analyzing the texture sequence, depth images of frames to be processed are divided into depth images that need to be corrected and depth images that do not need to be corrected.

For the partial depth images that need to be corrected, an optimized correction method is adopted, in which the optimized correction method may be, for example, a time-domain filtering method. For example, weighted processing is performed on the current frame for correction by using depth images of the r frames before the current time and the s frames after the current time, in which the r and s frames are continuous frames or discontinuous frames, where r, s=0, 1, 2, ..., and r+s$\geq$1.

In an embodiment of the present invention, another method for processing a depth image sequence is further provided, which includes: analyzing a depth sequence and a corresponding texture sequence at a depth sequence encoder, so as to obtain parameters for improving the depth sequence continuity, in which the parameters include all or a part of f, m, n, q, r, s, and wi, and carrying the parameters in a code stream. The meanings of values of the parameters are as follows: f=1, 0, where f=1 indicates that a current processing module adopts a method for processing the continuity of the depth image sequence, and f=0 indicates that the current processing module does not adopt the method for processing the continuity of the depth image sequence; m=0, 1, 2, ..., and q=0, 1, 2, ..., where m and q respectively indicate the number of frames in the texture sequence before and after the current time that are referred to when the enhancement algorithm is adopted; n=0, 1, where n=1 indicates that the current frame is referred to when the enhancement algorithm is adopted, and n=0 indicates that the current frame is not used; r=0, 1, 2, ..., and s=0, 1, 2, ..., where r and s respectively indicate the number of frames in the depth sequence before and after the current time that are referred to when the enhancement algorithm is adopted; m+n+q$\geq$2, and r+s$\geq$1; and wi is a weight of frames corresponding to m, n, q, r, and s, and the number of wi is m+n+q+r+s.

In an embodiment of the present invention, a third method for processing a depth image sequence is provided, which includes: processing a depth sequence at a depth sequence decoder according to parameters provided in a code stream and in combination with analysis of corresponding characteristics of the depth sequence, so as to enhance the time-domain continuity of the depth image sequence, in which the parameters include all or a part of f, m, n, q, r, s, and wi, and the meanings of the values of the parameters are as follows: f=1, 0, where f=1 indicates that a current processing module adopts an algorithm for enhancing the depth sequence continuity, and f=0 indicates that the current processing module does not adopt the algorithm for enhancing the depth sequence continuity; m=0, 1, 2, ..., and q=0, 1, 2, ..., where m and q respectively indicate the number of frames in the texture sequence before and after the current time that are referred to when the enhancement algorithm is adopted; n=0, 1, where n=1 indicates that the current frame is referred to when the enhancement algorithm is adopted, and n=0 indicates that the current frame is not used; r=0, 1, 2, ..., and s=0, 1, 2, ..., where r and s respectively indicate the number of frames in the depth sequence before and after the current time that are referred to when the enhancement algorithm is adopted; m+n+q$\geq$2, and r+s$\geq$1; and wi is a weight of frames corresponding to m, n, q, r, and s, and the number of wi is m+n+q+r+s.

The current depth sequence may first use a flag f to indicate whether to adopt a method for processing a depth image sequence for the depth sequence image.

The analyzing the texture sequence that reflects the same objective entity as the depth sequence image refers to analyzing motion information contained in the texture sequence to serve as characteristics of the texture sequence, and the characteristic values of the characteristics may be, for example, edges of a moving object, magnitudes of motion vectors, and directions of the motion vectors.

The motion information of the texture sequence may reflect the movement status of an image in a corresponding region, and whether to process the depth image sequence is determined according to the movement status, that is, according to the characteristic values obtained by analyzing the texture sequence, depth images of frames to be processed are divided into depth images that need to be corrected and depth images that do not need to be corrected.

For the partial depth images that need to be corrected, an optimized correction method is adopted, in which the optimized correction method may be, for example, a time-domain filtering method. For example, weighted processing is performed on the current frame for correction by using depth images of the r frames before the current time and the s frames after the current time, in which the r and s frames are continuous frames or discontinuous frames, where r, s=0, 1, 2, ..., and r+s$\geq$1.

In practical applications, in the algorithm, the number and distribution of frames in the texture sequence that are referred to, the number and selection of the characteristic values, the utilization strategy of the characteristic values, the number and distribution of frames in the depth sequence that are referred to, and a specific method for processing the depth sequence may be flexibly processed according to practical situations.

Because the texture sequence and the depth sequence reflect the same objective entity, the two sequences shall have the same properties. The poor time-domain consistency of the depth sequence can be compensated by the good time consistency of the texture sequence. Therefore, in the embodiments of the present invention, the characteristics of the texture sequence are detected, and then which optimization method is adopted for the corresponding depth sequence is determined through determination of the characteristic values, so as to achieve a result of improving the time-domain consistency of the depth sequence. Therefore, the quality of a generated virtual visual image is improved, the prediction residual and BER in encoding are reduced, that is, the efficiency of compression encoding of the depth sequence is enhanced, and meanwhile, the embodiments of the present invention are highly universal, and can be applied in various scenarios requiring the depth sequence to operate in cooperation with the texture sequence.

In the following, the embodiments of the present invention are introduced in detail.

## Example 1

A method for processing a depth image sequence is provided in the embodiment of the present invention, where the method includes:

(1) analyzing images of m=1 frame before a current time, n=1 frame at the current time, and q=0 frame after the current time in a texture sequence corresponding to a depth sequence image, and extracting characteristics of the texture sequence, in which a characteristic value in this embodiment may indicate whether a processed region moves; and

(2) processing a depth image of the current frame according to the extracted characteristics of the texture sequence in combination with r=1 frame before the current time and s=0 frame after the current time in the depth sequence, so as to enhance the time-domain continuity of the depth image sequence.

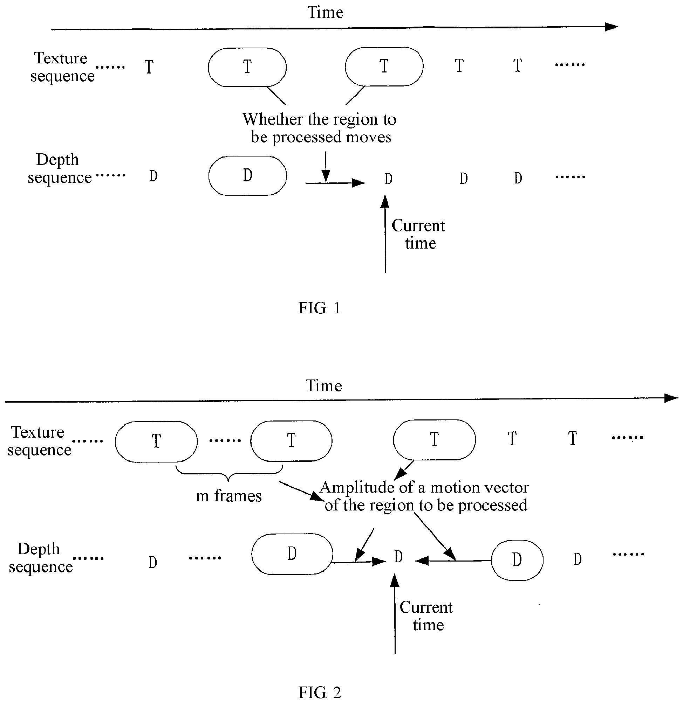

The distribution relation and the processing method of the texture image frames and the depth image frames used in the embodiment of the present invention are shown in FIG. 1.

In the embodiment of the present invention, characteristic analysis is to extract characteristics by using texture images corresponding to the current frame and a previous frame of the depth sequence. The extracted characteristic is whether a certain region moves. The specific method includes: calculating an SAD of a corresponding region on the current frame and the previous frame and determining the size of the SAD, when the SAD is greater than a threshold, determining that the region moves; and when the SAD is smaller than the threshold, determining that the region does not move. Herein, whether the region moves is the characteristic value.

In depth sequence processing, it is determined whether to process a certain pixel point by using the characteristic value obtained in the previous step, that is, the depth of the region that is determined to move does not need to be corrected, and the depth of the region that is determined not to move needs to be corrected. As for the pixel point that needs to be processed, weighted average is performed by using a value of a point at a corresponding position on the depth image of a previous frame and an original depth image, $D'_{nt} = w_n D_{nt} + w_r D_{rt}$, in which $D'_{nt}$ is a depth of a processed region of the current frame after correction, $D_{nt}$ is a depth of a processed region of the current frame before correction, $D_{rt}$ is a depth of a corresponding region on a previous frame of the current frame, and weights $w_n$ and $w_r$ are preset fixed values.

## Example 2

A method for processing a depth image sequence is provided in the embodiment of the present invention, where the method includes:

analyzing images of m=5 frames before a current time, n=1 frame at the current time, and q=0 frame after the current time in a texture sequence corresponding to a depth sequence image, and extracting characteristics of the texture sequence, in which a characteristic value in this embodiment may be an amplitude of a motion vector of a processed region; and

processing a depth image of the current frame according to the extracted characteristics of the texture sequence in combination with r=1 frame before the current time and s=1 frame after the current time in the depth sequence, so as to enhance the time-domain continuity of the depth image sequence.

The distribution relation and the processing method of the texture image frames and the depth image frames used in the embodiment of the present invention are shown in FIG. 2.

In the embodiment of the present invention, characteristic analysis is to extract characteristics by using texture images corresponding to the current frame and previous m frames of the depth sequence. The extracted characteristic value is the amplitude of the motion vector of the region.

In depth sequence processing, it is determined whether to process a certain pixel region by using the characteristic value obtained in the previous step, and if the amplitude of the motion vector is greater than a threshold, the depth correction is not performed on a corresponding region; if the amplitude of the motion vector is not greater than the threshold, weighted processing is performed by using the values of corresponding regions on the depth images of a previous frame and a next frame and the corresponding value of an original image, $D'_{nl} = w_{nl}D_{nl} + w_{rl}D_{rl} + w_{sl}D_{sl}$ , in which $D'_{nl}$ is a depth of a processed point of the current frame after correction, $D_{nl}$ is a depth of the processed point of the current frame before correction, $D_{rl}$ is a depth corresponding to a processed point on a previous frame of the current frame, $D_{sl}$ is a depth corresponding to a processed point on a next frame of the current frame, and weights $w_{nl}$ , $w_{rl}$, and $w_{sl}$ are dynamically determined according to the amplitude of the motion vector of the region.

**Embodiment 3**

A method for processing a depth image sequence is provided in the embodiment of the present invention, where the method includes:

analyzing images of m=6 frames before a current time, n=0 frame at the current time, and q=10 frames after the current time in a texture sequence corresponding to a depth sequence image, and extracting characteristics of the texture sequence, in which a characteristic value in this embodiment may be a motion vector of a processed region, including amplitude and direction information; and

processing a depth image of the current frame according to the extracted characteristics of the texture sequence in combination with r=10 frames before the current time and s=5 frames after the current time, so as to enhance the time-domain continuity of the depth image sequence.

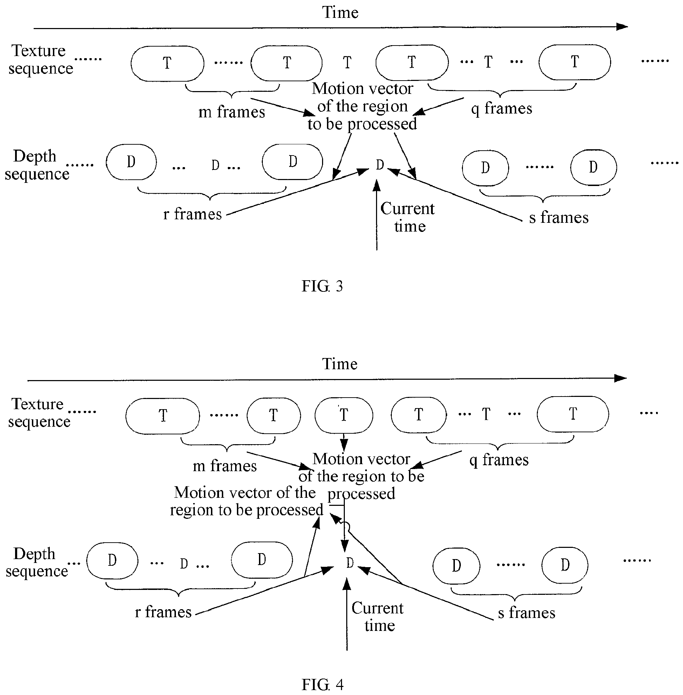

The distribution relation and the processing method of the texture image frames and the depth image frames used in the embodiment of the present invention are shown in FIG. 3.

In the embodiment of the present invention, characteristic analysis is to extract characteristics by using texture images corresponding to m frames before the current frame and q frames after the current time, in which the m frames and the q frames are discontinuous with some frames skipped, for example, when the current frame is a 10th frame, the selected m frames are a 1st frame, a 4th frame, a 5th frame, a 6th frame, an 8th frame, and a 9th frame. The extracted characteristic value is the motion vector of the region, including the amplitude and direction information.

In depth sequence processing, it is determined whether to process a certain pixel region by using the characteristic value obtained in the previous step, and if the amplitude of the motion vector is greater than a threshold, correction is not performed on a corresponding region; if the amplitude of the motion vector is not greater than the threshold, weighted processing is performed by using the values of corresponding regions on the depth images of the r frames before the current time and the s frames after the current time in the depth sequence and the corresponding value of an original image, $D'_{nt} = w_{nt}D_{nt} + \sum_{i=1}^{r} w_{rit}D_{rit} + \sum_{j=1}^{s} w_{sjt}D_{sjt}$ , in which $D'_{nt}$ is a depth of a processed region of the current frame after correction, $D_{nt}$ is a depth of a processed region of the current frame before correction, $D_{rit}$ is a depth corresponding to a weighted region of an ith frame in selected frames before the current frame, $D_{sjt}$ is a depth corresponding to a weighted region of a jth frame in selected frames after the current frame, weights $w_{nt}$, $W_{rit}$, and $w_{sjt}$ are dynamically determined according to the amplitude of the motion vector of the region, and the depth processing region for weighting is determined by the direction of the motion vector, for example, if the direction of the motion vector of the current region is horizontal, $D_{rit}$ is a depth of a region to be processed and left and right regions adjacent to the region to be processed. Herein, the depth images of the r frames are discontinuous, and the depth images of the s frames are continuous.

**Embodiment 4**

A method for processing a depth image sequence is provided in the embodiment of the present invention, where the method includes:

analyzing images of m=5 frames before a current time, n=1 frame at the current time, and q=5 frames after the current time in a texture sequence corresponding to a depth sequence image, and extracting characteristics of the texture sequence, in which a characteristic value in this example may be a motion vector of a processed region, including amplitude and direction information; and

processing a depth image of the current frame in combination with r=6 frames before the current time and s=10 frames after the current time in the depth sequence and the corresponding characteristics (the characteristic value may be the motion vector of the region, including amplitude and direction information) of the r frames and s frames in the depth sequence, so as to enhance the time-domain continuity of the depth image sequence.

The distribution relation and the processing method of the texture image frames and the depth image frames used in the embodiment of the present invention are as shown in FIG. 4.

In the embodiment of the present invention, characteristic analysis is to extract characteristics by using texture images of the m frames before the current time, one frame at the current time, and the q frames after the current time and the depth images of the r frames before the current time and the s frames after the current time, in which the m frames and the q frames are discontinuous. The extracted characteristic value may be the motion vector of the region, including the amplitude and direction information.

In depth sequence processing, it is determined whether to process a certain pixel region by using the characteristic value obtained in the previous step, and if the directions of the motion vectors extracted from the texture sequence and the depth sequence are consistent with each other, correction is not performed on a corresponding region; if the directions of the motion vectors extracted from the texture sequence and the depth sequence are inconsistent with each other, weighted processing is performed by using the values of corresponding regions on the depth images of the r frames before the current time and the s frames after the current time in the depth sequence and the corresponding value of an original image, $D'_{nt} = w_{nt}D_{nt} + \sum_{i=1}^{r} w_{rit}D_{rit} + \sum_{j=1}^{s} w_{sjt}D_{sjt}$ , in which $D'_{nt}$ is a depth of a processed region of the current frame after correction, $D_{nt}$ is a depth of a processed region of the current frame before correction, $D_{rit}$ is a depth corresponding to a weighted region of an ith frame in selected frames before the current frame, $D_{sjt}$ is a depth corresponding to a weighted region of a jth frame in selected frames after the current frame, weights $w_{nt}$, $w_{rit}$, and $w_{sjt}$ are dynamically determined according to the amplitude of the motion vector of the region, and the depth processing region for weighting is determined by the direction of the motion vector, for example, if the direction of the motion vector of the current region is horizontal, $D_{rit}$ is a depth of a region to be processed and left and right regions adjacent to the region to be processed. Herein, the depth images of the r frames are discontinuous, and the depth images of the s frames are continuous.

**Embodiment 5**

A method for processing a depth image sequence is provided in the embodiment of the present invention, where the method includes:

(1) analyzing images of m=3 frames before a current time, n=0 frame at the current time, and q=5 frames after the current time in a texture sequence corresponding to a depth sequence image, and extracting characteristics of the texture sequence, in which a characteristic value in this embodiment may be a motion vector of a processed region including amplitude and direction information; and

(2) processing a depth image of the current frame in combination with r=4 frames before the current time and s=4 frames after the current time in the depth sequence and the corresponding characteristics (the characteristic value may be the motion vector of the region, including amplitude and direction information) of the r'=5 frames and s'=6 frames in the depth sequence, so as to enhance the time-domain continuity of the depth image sequence.

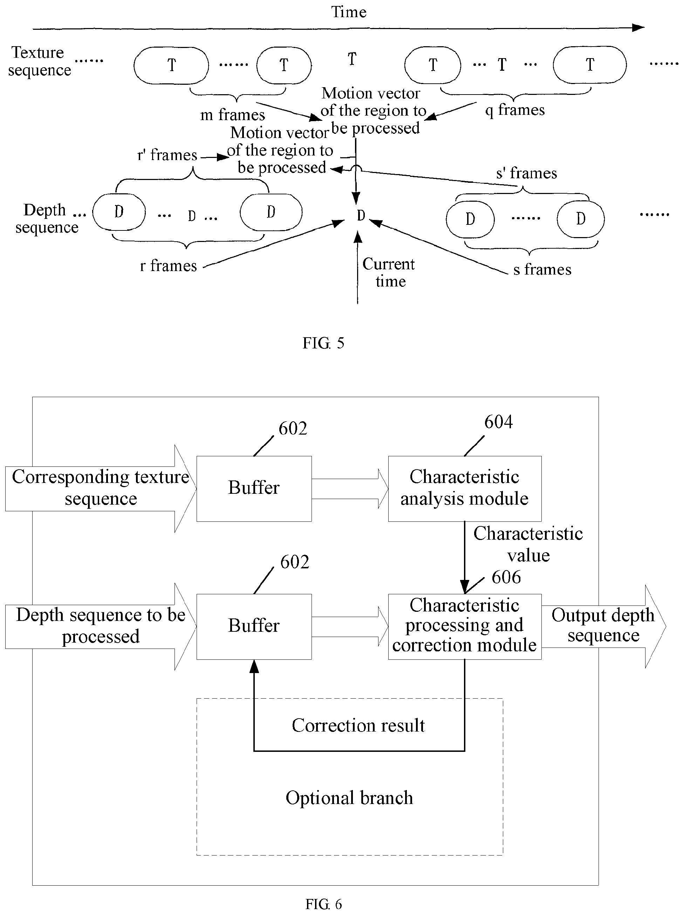

The distribution relation and the processing method of the texture image frames and the depth image frames used in the embodiment of the present invention are as shown in FIG. 5.

In characteristic analysis, characteristics are extracted by using the texture images corresponding to m frames before the current time and q frames after the current time, and the depth images of the r' frames before the current time and the s' frames after the current time in the depth sequence, in which the m frames are continuous, and the q frames are discontinuous. The extracted characteristic value is the motion vector of the region, including the amplitude and direction information. Herein, the depth images of the r' frames are discontinuous, and the depth images of the s' frames are continuous.

In depth sequence processing, it is determined whether to process a certain pixel region by using the characteristic value obtained in the previous step, and if the directions of the motion vectors extracted from the texture sequence and the depth sequence are consistent with each other, correction is not performed on a corresponding region; if the directions of the motion vectors extracted from the texture sequence and the depth sequence are inconsistent with each other, weighted processing is performed by using the values of corresponding regions on the depth images of the r frames before the current time and the s frames after the current time in the depth sequence and the corresponding value of an original image, $D'_{nt} = w_{nt}D_{nt} + \sum_{i=1}^{r} w_{rit}D_{rit} + \sum_{j=1}^{s} w_{sjt}D_{sjt}$   in which $D'_{nt}$ is a depth of a processed region of the current frame after correction, $D_{nt}$ is a depth of a processed region of the current frame before correction, $D_{rit}$ is a depth corresponding to a weighted region of an ith frame in selected frames before the current frame, $D_{sjt}$ is a depth corresponding to a weighted region of a jth frame in selected frames after the current frame, weights $w_{nt}$, $w_{rit}$, and $w_{sjt}$ are dynamically determined according to the amplitude of the motion vector of the region, and the depth processing region for weighting is determined by the direction of the motion vector, for example, if the direction of the motion vector of the current region is horizontal, $D_{rit}$ is a depth of a region to be processed and left and right regions adjacent to the region to be processed. Herein, the depth images of the r frames are discontinuous, and the depth images of the s frames are continuous.

**Embodiment 6**

A method for processing a depth image sequence is provided in the embodiment of the present invention, where the method is applied to an encoder, and includes: analyzing a texture sequence corresponding to a depth sequence, so as to obtain parameters for improving the depth sequence continuity, in which the parameters include f, m, n, q, r, s, and wi, and carrying the parameters in a code stream. The meanings of the values of the parameters are: f=1, 0, where f=1 indicates that a current processing module adopts an algorithm for enhancing the depth sequence continuity, and f=0 indicates that the current processing module does not adopt the algorithm for enhancing the depth sequence continuity; m=0, 1, 2, ..., and q=0, 1, 2, ..., where m and q respectively indicate the number of frames in the texture sequence before and after the current time that are referred to when the enhancement algorithm is adopted; n=0, 1, where n=1 indicates that the current frame is referred to when the enhancement algorithm is adopted, and n=0 indicates that the current frame is not used; r=0, 1, 2, ..., and s=0, 1, 2, ..., where r and s respectively indicate the number of frames in the depth sequence before and after the current time that are referred to when the enhancement algorithm is adopted; m+n+q≥2, and r+s≥1; and wi is a weight of frames corresponding to m, n, q, r, and s.

Herein, the specific method for obtaining the parameters includes:

setting the parameters to a default value (all being 1);

performing characteristic analysis on a texture sequence and a depth sequence, in which a characteristic value is a motion vector, including amplitude and direction information;

processing the depth sequence according to the characteristic values of the texture sequence and the depth sequence, so as to obtain a corrected depth sequence, which specifically includes: if the directions of the motion vectors extracted from the texture sequence and the depth sequence are consistent with each other, not performing correction on a corresponding region; if the directions of the motion vectors extracted from the texture sequence and the depth sequence are inconsistent with each other, performing weighted processing by using the values of corresponding regions on the depth images of the r frames before the current time and the s frames after the current time in the depth sequence and the corresponding value of an original image,

$$D'_{nt} = w_{nt}D_{nt} + \sum_{i=1}^{r} w_{rit}D_{rit} + \sum_{j=1}^{s} w_{sjt}D_{sjt}$$   in which $D'_{nt}$ is a depth of a processed region of the current

frame after correction, $D_{nt}$ is a depth of a processed region of the current frame before correction, $D_{rit}$ is a depth corresponding to a processed region of an ith frame in selected frames before the current frame, $D_{sjt}$ is a depth corresponding to a processed region of a jth frame in selected frames after the current frame, weights $w_{nt}$, $w_{rit}$, and $w_{sjt}$ are dynamically determined according to the amplitude of the motion vector of the region, and the region for weighting is determined by the direction of the motion vector;

determining whether the depth sequence continuity meets the quality requirement, in which if the depth sequence continuity meets the quality requirement, the current parameters serve as final parameters and are carried in a code stream; if the depth sequence continuity does not meet the quality requirement, the parameters are changed in sequence within a certain range (for example, the range of the parameters is set to be 1 to 3, and the parameters are sequentially added by 1 from the default value), and steps (2) to (4) are repeated; and

if the depth sequence continuity still does not meet the quality requirement after all parameter combinations are tried, recording the parameter combination having the optimal depth continuity at the current time among various parameter combinations in the code stream.

**Embodiment 7**

A method for processing a depth image sequence is provided in the embodiment of the present invention, where the method includes:

according to parameters f, m, n, q, r, s, and wi provided in a code stream,

analyzing images of m frames before a current time, n frames at the current time, and q frames after the current time in a texture sequence corresponding to a depth sequence image, and extracting relevant characteristics of the texture sequence, in which a characteristic value may be a motion vector, including amplitude and direction information; and

processing a depth image of the current frame according to the characteristics of the texture sequence in combination with r frames before the current time and s frames after the current time in a depth sequence, so as to enhance the time-domain continuity of the depth image sequence.

The method can be applied to a decoder.
The parameters provided in the code stream include f, m, n, q, r, s, and wi, and the meanings of the values of the parameters are as follows: f=1, 0, where f=1 indicates that a current processing module adopts an algorithm for enhancing the depth sequence continuity, and f=0 indicates that the current processing module does not adopt the algorithm for enhancing the depth sequence continuity; m=0, 1, 2, ..., and q=0, 1, 2, ..., where m and q respectively indicate the number of frames in the texture sequence before and after the current time that are referred to when the enhancement algorithm is adopted; n=0, 1, where n=1 indicates that the current frame is referred to when the enhancement algorithm is adopted, and n=0 indicates that the current frame is not used; r=0, 1, 2, ..., and s=0, 1, 2, ..., where r and s respectively indicate the number of frames in the depth sequence before and after the current time that are referred to when the enhancement algorithm is adopted; $m+n+q \geq 2$, and $r+s \geq 1$; and wi is a weight of frames corresponding to m, n, q, r, and s.
A specific method for processing the depth sequence is as follows. It is determined whether to process a certain pixel region by using the characteristic value extracted from the texture sequence, and if the amplitude of the motion vector is smaller than a threshold, correction is not performed on a corresponding region; if the amplitude of the motion vector is not smaller than the threshold, weighted processing is performed by using the values of corresponding regions on the depth images of the r frames before the current time and the s frames after the current time in the depth sequence and the corresponding value of an original image, $D'_{nt} = w_{nt}D_{nt} + \sum_{i=1}^{r} w_{rit}D_{rit} + \sum_{j=1}^{s} w_{sjt}D_{sjt}$   in which $D'_{nt}$ is

a depth of a processed region of the current frame after correction, $D_{nt}$ is a depth of a processed region of the current frame before correction, $D_{rit}$ is a depth corresponding to a weighted region of an ith frame in selected frames before the current frame, $D_{sjt}$ is a depth corresponding to a weighted region of a jth frame in selected frames after the current frame, weights $w_{nt}$, $w_{rit}$, and $w_{sjt}$ are dynamically determined according to the amplitude of the motion vector of the region, and the depth processing region for weighting is determined by the direction of the motion vector, for example, if the direction of the motion vector of the current region is horizontal, $D_{rit}$ is a depth of a region to be processed and left and right regions adjacent to the region to be processed. Herein, the depth images of the r frames are discontinuous, and the depth images of the s frames are continuous.

**Embodiment 8**

FIG 6 shows a device for processing a depth image sequence according to the embodiment of the present invention, which includes a buffer 602, a characteristic analysis module 604, and a characteristic processing and correction module 606. The buffer is connected to the characteristic analysis module and the characteristic processing and correction module respectively. The characteristic analysis module is connected to the characteristic processing and correction module. The characteristic analysis module is configured to analyze a texture sequence, so as to obtain relevant characteristic information, and the characteristic processing and correction module is configured to perform corresponding processing and correction on a depth sequence according to the characteristic information.

In the embodiment of the present invention, the characteristic information refers to a motion vector, including amplitude and direction information. The characteristic processing and correction module determines whether to process a certain pixel region according to characteristic values extracted from the texture sequence, and if the amplitude of the motion vector is smaller than a threshold, correction is not performed on a corresponding region; if the amplitude of the motion vector is not smaller than the threshold, weighted processing is performed by using the values of corresponding regions on depth images of r frames before a current time and s frames after the current time in the depth sequence and the corresponding value of an original image, $D'_{nt} = w_{nt}D_{nt} + \sum_{i=1}^{r} w_{rit}D_{rit} + \sum_{j=1}^{s} w_{sjt}D_{sjt}$ in which $D'_{nt}$ is

a depth of a processed region of the current frame after correction, $D_{nt}$ is a depth of a processed region of the current frame before correction, $D_{rit}$ is a depth corresponding to a processed region of an ith frame in selected frames before the current frame, $D_{jst}$ is a depth corresponding to a processed region of a jth frame in selected frames after the current frame, weights $w_{nt}$, $w_{rit}$, and $w_{sjt}$ are dynamically determined according to the amplitude of the motion vector of the region, and the region for weighting is determined by the direction of the motion vector.

**Embodiment 9**

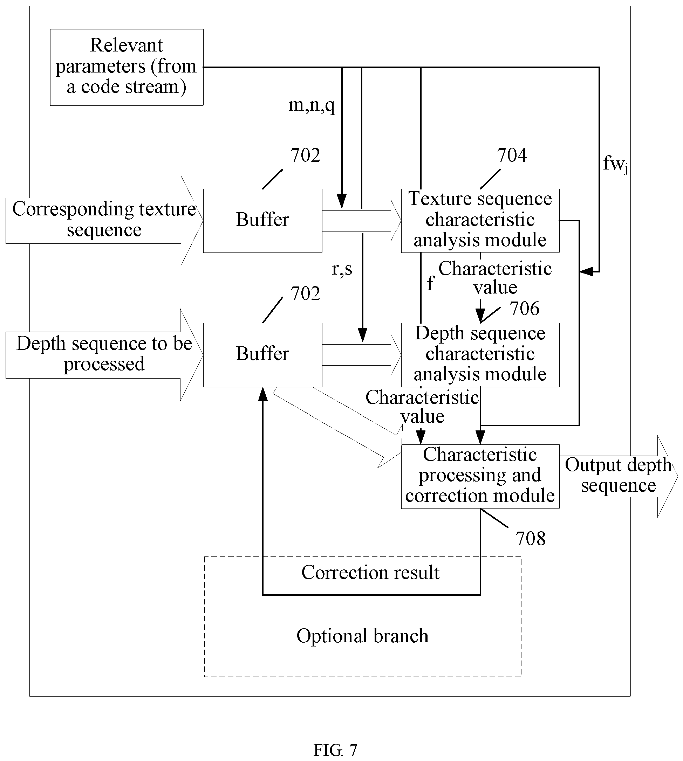

FIG. 7 shows another device for processing a depth image sequence according to the embodiment of the present invention, which includes a buffer 702, a texture sequence characteristic analysis module 704, a depth sequence characteristic analysis module 706, a characteristic processing and correction module 708, and a series of control branches. The buffer is connected to the texture sequence characteristic analysis module, the depth sequence characteristic analysis module, and the characteristic processing and correction module respectively. The texture sequence characteristic analysis module and the depth sequence characteristic analysis module are connected to the characteristic processing and correction module. The texture sequence characteristic analysis module is configured to analyze a texture sequence, so as to obtain relevant characteristic information, the depth sequence characteristic analysis module is configured to analyze a depth sequence, and the characteristic processing and correction module is configured to perform corresponding processing and correction on the depth sequence according to the texture and the depth characteristic information. The control branches are configured to determine parameters required for operation of the modules according to control information sent by an encoder.

The texture sequence characteristic analysis module is configured to perform characteristic analysis on texture images corresponding to m frames before the current depth sequence, q frames after the current depth sequence, and n frames of the current depth sequence, in which the characteristic value is a motion vector. The depth sequence characteristic analysis module is configured to perform analysis on the current frame, r frames before the current frame, and s frames after the current frame in the depth sequence, in which the characteristic value is a motion vector. Herein, m, n, q, r, and s are specified by the encoder and transmitted through a channel.

The characteristic processing and correction module is configured to determine whether to process a current processing module by using a flag f from the encoder, and perform weighted processing by using the motion vector obtained through texture and depth image sequence characteristic analysis in combination with wi if the current processing module needs to be processed. Whether a region needs to be weighted is determined through comparison of directions of respective motion vectors of the texture sequence and the depth sequence, and if a difference between the directions exceeds a threshold, it is determined that the weighted processing needs to be performed on the region. The formula of the weighted processing is $D'_{nl} = w_{nl}D_{nl} + \sum_{i=1}^{r} w_{ril}D_{ril} + \sum_{j=1}^{s} w_{sjl}D_{sjl}$ , where $D'_{nl}$ is a depth of a processed point of the current frame after correction, $D_{nl}$ is a depth of the processed point of the current frame before correction, $D_{ril}$ is a depth corresponding to a processed point of an ith frame in selected frames before the current frame, $D_{sjl}$ is a

depth corresponding to a processed point of a jth frame in selected frames after the current frame, and weights $w_{nl}$, $w_{ril}$, and $w_{sjl}$ are jointly determined by the motion vector and the weight wi from the encoder.

**Embodiment 10**

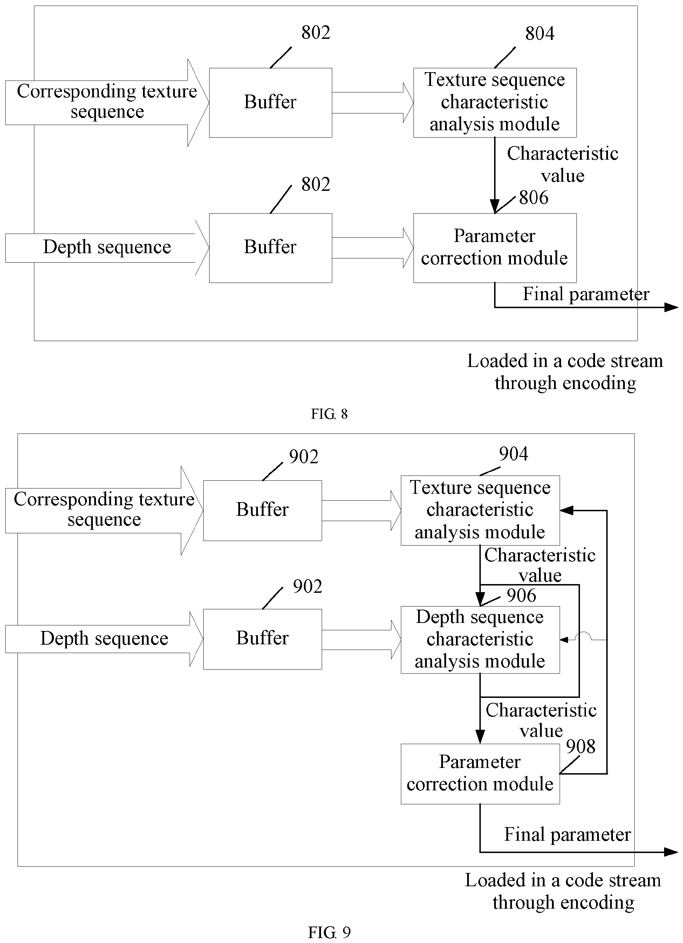

FIG. 8 shows another device for processing a depth image sequence according to the embodiment of the present invention, which includes a buffer 802, a texture sequence characteristic analysis module 804, and a parameter correction module 806. The buffer is connected to the texture sequence characteristic analysis module and the parameter correction module respectively, and the texture sequence characteristic analysis module is bi-directionally connected to the parameter correction module.

The texture sequence characteristic analysis module is configured to: perform characteristic analysis on texture images corresponding to m frames before the current depth sequence, q frames after the current depth sequence, and n frames of the current depth sequence, in which the characteristic value is motion information of a region to be processed; and transmit the motion information to the parameter correction module.

The parameter correction module is configured to correct parameters f, m, n, q, r, s, and wi through the obtained motion information in combination with the depth sequence, in which the meanings of the values of the parameters are as follows: f=1, 0, where f=1 indicates that a current processing module adopts an algorithm for enhancing the depth sequence continuity, and f=0 indicates that the current processing module does not adopt the algorithm for enhancing the depth sequence continuity; m=0, 1, 2, ..., and q=0, 1, 2, ..., where m and q respectively indicate the number of frames in the texture sequence before and after the current time that are referred to when the enhancement algorithm is adopted; n=0, 1, where n=1 indicates that the current frame is referred to when the enhancement algorithm is adopted, and n=0 indicates that the current frame is not used; r=0, 1, 2, ..., and s=0, 1, 2, ..., where r and s respectively indicate the number of frames in the depth sequence before and after the current time that are referred to when the enhancement algorithm is adopted; m+n+q≥2, and r+s≥1; and wi is a weight of frames corresponding to m, n, q, r, and s. The parameter correction module is configured to transmit the corrected parameters back to the texture sequence characteristic analysis module, and send the parameters as the optimal parameters when the parameters are stable after several cycles together with the depth sequence to the encoder for encoding processing.

The specific method for obtaining the parameters includes:

setting the parameters to a default value (all being 1);

performing characteristic analysis on a texture sequence, in which a characteristic value is a motion vector, including amplitude and direction information;

processing the depth sequence according to the characteristic value of the texture sequence, so as to obtain a corrected depth sequence, which specifically includes: if the amplitude of the motion vector is greater than a threshold, not performing correction on a corresponding region; if the amplitude of the motion vector is not greater than the threshold, performing weighted processing by using the values of corresponding regions on the depth images of the r frames before the current time and the s frames after the current time in the **depth sequence and the corre-**

**sponding value of an original image,** $D'_{nt} = w_{nt}D_{nt} + \sum_{i=1}^{r} w_{rit}D_{rit} + \sum_{j=1}^{s} w_{sjt}D_{sjt}$ , in which $D'_{nt}$ is a depth of a processed region of the current frame after correction, $D_{nt}$ is a depth of a processed region of the current frame before correction, $D_{rit}$ is a depth corresponding to a weighted region of an ith frame in selected frames before the current frame, $D_{sjt}$ is a depth corresponding to a weighted region of a jth frame in selected frames after the current frame, weights $w_{nt}$, $w_{rit}$, and $w_{sjt}$ are dynamically determined according to the amplitude of the motion vector of the region, and the depth processing region for weighting is determined by the direction of the motion vector, for example, if the direction of the motion vector of the current region is horizontal, $D_{rit}$ is a depth of a region to be processed and left and right regions adjacent to the region to be processed;

determining whether the depth sequence continuity meets the quality requirement, in which if the depth sequence continuity meets the quality requirement, the current parameters serve as final parameters and are carried in a code stream; if the depth sequence continuity does not meet the quality requirement, the parameters are changed in sequence within a certain range (for example, the range of the parameters is set to be 1 to 3, and the parameters are sequentially added by 1 from the default value), and steps (2) to (4) are repeated; and

if the depth sequence continuity still does not meet the quality requirement after all parameter combinations are tried, recording the parameter combination having the optimal depth continuity at the current time among various parameter combinations in the code stream.

**Embodiment 11**

FIG. 9 shows another device for processing a depth image sequence according to the embodiment of the present invention, which includes a buffer 902, a texture sequence characteristic analysis module 904, a depth sequence characteristic analysis module 906, and a parameter correction module 908. The buffer is connected to the texture sequence characteristic analysis module, the depth sequence characteristic analysis module, and the parameter correction module respectively, and the texture sequence characteristic analysis module is bi-directionally connected to the parameter correction module.

The texture sequence characteristic analysis module is configured to perform characteristic analysis on texture images corresponding to m frames before the current depth sequence, q frames after the current depth sequence, and n frames of the current depth sequence, and transmit characteristic values to the texture sequence characteristic analysis module and the parameter correction module. The depth sequence characteristic analysis module is configured to extract the corresponding characteristic value of the depth sequence according to the texture sequence characteristic value and the depth sequence information, and transmit a result to the parameter correction module.

The parameter correction module is configured to correct parameters f, m, n, q, r, s, and wi through the obtained characteristic value in combination with the depth sequence, in which the meanings of the values of the parameters are as follows: f=1, 0, where f=1 indicates that a current processing module adopts an algorithm for enhancing the depth sequence continuity, and f=0 indicates that the current processing module does not adopt the algorithm for enhancing the depth sequence continuity; m=0, 1, 2, ..., and q=0, 1, 2, ..., where m and q respectively indicate the number of frames in the texture sequence before and after the current time that are referred to when the enhancement algorithm is adopted; n=0, 1, where n=1 indicates that the current frame is referred to when the enhancement algorithm is adopted, and n=0 indicates that the current frame is not used; r=0, 1, 2, ..., and s=0, 1, 2, ..., where r and s respectively indicate the number of frames in the depth sequence before and after the current time that are referred to when the enhancement algorithm is adopted; m+n+q≥2, and r+s≥1; and wi is a weight of frames corresponding to m, n, q, r, and s. The parameter correction module is configured to transmit the corrected parameters back to the texture sequence characteristic analysis module, and send the parameters as the optimal parameters when the parameters are stable after several cycles together with the depth sequence to the encoder for encoding processing.

The specific method for obtaining the parameters includes:

setting the parameters to a default value (all being 1);

performing characteristic analysis on a texture sequence and a depth sequence, in which a characteristic value is a motion vector, including amplitude and direction information;

processing the depth sequence according to the characteristic values of the texture sequence and the depth sequence, so as to obtain the corrected depth sequence, which specifically includes: if the directions of the motion vectors extracted from the texture sequence and the depth sequence are consistent with each other, not performing correction on a corresponding region; if the directions of the motion vectors extracted from the texture sequence and the depth sequence are inconsistent with each other, performing weighted processing by using the values of corresponding regions on the depth images of the r frames before the current time and the s frames after the current time in the depth sequence and the corresponding value of an original image,

$$D'_{nt} = w_{nt}D_{nt} + \sum_{i=1}^{r} w_{rit}D_{rit} + \sum_{j=1}^{s} w_{sjt}D_{sjt}$$ in which $D'_{nt}$ is a depth of a processed region of the current

frame after correction, $D_{nt}$ is a depth of a processed region of the current frame before correction, $D_{rit}$ is a depth corresponding to a processed region of an ith frame in selected frames before the current frame, $D_{sjt}$ is a depth corresponding to a processed region of a jth frame in selected frames after the current frame, weights $w_{nt}$, $w_{rit}$, and $w_{sjt}$ are dynamically determined according to the amplitude of the motion vector of the region, and the region for weighting is determined by the direction of the motion vector;

determining whether the depth sequence continuity meets the quality requirement, in which if the depth sequence continuity meets the quality requirement, the current parameters serve as final parameters and are carried in a code stream; if the depth sequence continuity does not meet the quality requirement, the parameters are changed in sequence within a certain range (for example, the range of the parameters is set to be 1 to 3, and the parameters are sequentially added by 1 from the default value), and steps (2) to (4) are repeated; and

if the depth sequence continuity still does not meet the quality requirement after all parameter combinations are tried, recording the parameter combination having the optimal depth continuity at the current time among various parameter combinations in the code stream.

In the embodiments of the present invention, a characteristic value of a texture sequence is detected, and then which optimization method is adopted for a corresponding depth sequence is determined through determination of the characteristic value, so as to achieve a result of improving the time-domain consistency of the depth sequence, thereby enhancing the quality of a generated virtual visual image and reducing the prediction residual and BER in encoding, that is, improving the efficiency of compression encoding of the depth sequence, and meanwhile, the embodiments of the present invention are highly universal, and can be applied in various scenarios requiring the depth sequence to operate in cooperation with the texture sequence.

Persons of ordinary skill in the art can further understand that, the units and the steps of algorithms according to the embodiments of the present invention may be implemented by electronic hardware, computer software, or a combination thereof. In order to illustrate the interchangeability of the hardware and the software, the compositions and steps of the embodiments are generally described according to functions in the above description. Whether the functions are performed as hardware or software is dependent on the specific applications and design constraints of the technical solutions. Persons of ordinary skill can use different methods for each specific application to implement the described functions.

The steps of the methods or algorithms according to the embodiments of the present invention may be implemented by hardware, software modules executed by a processor, or a combination thereof. The software modules may be stored in a storage medium, for example, random access memory (RAM), memory, read-only memory (ROM), electrically programmable ROM, electrically erasable and programmable ROM, register, hard disk, removable disk, CD-ROM, or any other storage media known in the industry.

## Claims

1.  A method for processing a depth image sequence, comprising:

    analyzing images of m frames before a current time, n frame at the current time, wherein n = 0 or 1, and q frames after the current time in a texture sequence corresponding to a depth image sequence, and extracting characteristics of the texture sequence, wherein the extracting the characteristics of the texture sequence comprises: analyzing motion information of the texture sequence, and extracting the motion information as a characteristic value, and wherein when n=1, the analyzing images of m frames before a current time, n frame at the current time, and q frames after the current time in a texture sequence corresponding to a depth image sequence comprises: analyzing images of m frames before the current time, the frame at the current time, and q frames after the current time in the texture sequence corresponding to the depth image sequence, and when n=0, the analyzing images of m frames before a current time, n frame at the current time, and q frames after the current time in a texture sequence corresponding to a depth image sequence comprises: analyzing images of m frames before the current time, and q frames after the current time in the texture sequence corresponding to the depth image sequence ; and
    weighted processing a depth image at the current time according to the characteristics of the texture sequence for correction by using r frames before the current time and s frames after the current time in the depth image sequence according to $D'_{nt} = w_{nt}D_{nt} + \sum_{i=1}^{r} w_{rit}D_{rit} + \sum_{j=1}^{s} w_{sjt}D_{sjt}$ wherein $D'_{nt}$ is a depth of the processed region of the depth image at the current time after correction, $D_{nt}$ is a depth of the processed region of the depth image at the current time before correction, $D_{rit}$ is a depth corresponding to a weighted region of an $i^{th}$ frame in the r frames before the depth image at the current time, $D_{sjt}$ is a depth corresponding to a weighted region of a $j^{th}$ frame in the s frames after the depth image at the current time, weights $w_{nt}$, $w_{rit}$, and $w_{sjt}$ are dynamically determined according to the amplitude of the motion vector of the region, in which m=0, 1, 2, ...; q=0, 1, 2, ...; r=0, 1, 2, ...; s=0, 1, 2, ...; and the m, q, r, and s frames are continuous frames or discontinuous frames, wherein discontinuous frames are frames with at least one frame skipped, and where m+n+q≥2, and r+s≥1.

2. The method for processing a depth image sequence according to claim 1, wherein the weighted processing the depth image at the current time according to the characteristics of the texture sequence comprises:
dividing the depth image at the current time to be processed into the pixel region that needs to be corrected and a pixel region that does not need to be corrected.

3. The method for processing a depth image sequence according to claim 2, wherein for the pixel region that needs to be corrected, weighted processing is performed for correction by using depth images of the r frames before the current time and the s frames after the current time; and the r frames and the s frames are continuous frames or discontinuous frames with at least one frame skipped, where r, s=0, 1, 2, ..., and r+s≥1.

4. A device for processing a depth image sequence, comprising a texture sequence characteristic analysis module (804) and a parameter correction module (806), wherein
the texture sequence characteristic analysis module (804) is configured to analyze images of m frames before a current time, n frame at the current time, wherein n = 0 or 1, and q frames after the current time in a texture sequence corresponding to a depth image sequence, so as to obtain characteristics information of the texture sequence, wherein the obtaining the characteristics information of the texture sequence comprises: analyzing motion information of the texture sequence, and extracting the motion information as a characteristic value, and wherein when n=1, the analyzing images of m frames before a current time, n frame at the current time, and q frames after the current time in a texture sequence corresponding to a depth image sequence comprises: analyzing images of m frames before the current time, the frame at the current time, and q frames after the current time in the texture sequence corresponding to the depth image sequence, and when n=0, the analyzing images of m frames before a current time, n frame at the current time, and q frames after the current time in a texture sequence corresponding to a depth image sequence comprises: analyzing images of m frames before the current time, and q frames after the current time in the texture sequence corresponding to the depth image sequence; and
the parameter correction module (806) is configured to correct parameters f, m, n, q, r, s, and wi according to a texture sequence characteristic value and the depth image sequence, wherein f=1, 0, where f=1 indicates that a current processing module adopts an algorithm for enhancing the time-domain consistency of the depth image sequence, and f=0 indicates that the current processing module does not adopt the algorithm for enhancing the time-domain consistency of the depth image sequence; m=0, 1, 2, ..., and q=0, 1, 2, ..., where m and q respectively indicate the number of frames in the texture sequence before and after a current time that are referred to when the enhancement algorithm is adopted; r=0, 1, 2, ..., and s=0, 1, 2, ..., where r and s respectively indicate the number of frames in the depth image sequence before and after the current time that are referred to when the enhancement algorithm is adopted; m+n+q≥2, and r+s≥1; and wi is a weight of frames corresponding to m, n, q, r, and s; and to return the corrected parameters to the texture sequence characteristic analysis module, wherein the algorithm for enhancing the time-domain consistency of the depth image sequence comprises: weighted processing a depth image at the current time according to the characteristics of the texture sequence for correction by using r frames before the current time and s frames after the current time in the depth image sequence according to

$$D'_{nt} = w_{nt}D_{nt} + \sum_{i=1}^{r} w_{rit}D_{rit} + \sum_{j=1}^{s} w_{sjt}D_{sjt},$$ wherein $D'_{nt}$ is a depth of the processed region of the depth image at the current time after correction, $D_{nt}$ is a depth of the processed region of the depth image at the current time before correction, $D_{rit}$ is a depth corresponding to a weighted region of an i$^{th}$ frame in the r frames before the depth image at the current time, $D_{sjt}$ is a depth corresponding to a weighted region of a j$^{th}$ frame in the s frames after the depth image at the current time, weights $w_{nt}$, $w_{rit}$, and $w_{sjt}$ are dynamically determined according to the amplitude of the motion vector of the region.

5. The device for processing a depth image sequence according to claim 4, further comprising a depth sequence characteristic analysis module (906), wherein
the depth sequence characteristic analysis module (906) is further configured to analyze a depth image sequence, so as to obtain characteristic information of the depth image sequence; and
the parameter correction module (908) is configured to correct the parameters f, m, n, q, r, s, and wi according to the texture sequence characteristic value, the depth image sequence characteristic value, and the depth image sequence.

**Patentansprüche**

1. Verfahren zum Verarbeiten einer Tiefenbildfolge, das Folgendes umfasst:
Analysieren von Bildern von m Blöcken vor einer aktuellen Zeit, n Blöcken zur aktuellen Zeit, wobei n = 0 oder 1, und q Blöcken nach der aktuellen Zeit in einer Texturfolge, die einer Tiefenbildfolge entspricht, und Extrahieren von Eigenschaften der Texturfolge, wobei das Extrahieren der Eigenschaften der Texturfolge Folgendes umfasst: Analysieren von Bewegungsinformationen der Texturfolge und Extrahieren der Bewegungsinformationen als einen charakteristischen Wert und wobei dann, wenn n = 1, das Analysieren von Bildern von m Blöcken vor einer aktuellen Zeit, n Blöcken zur aktuellen Zeit und q Blöcken nach der aktuellen Zeit in einer Texturfolge, die einer Tiefenbildfolge entspricht, Folgendes umfasst: Analysieren von Bildern von m Blöcken vor der aktuellen Zeit, des Blocks zur aktuellen Zeit und q Blöcken nach der aktuellen Zeit in der Texturfolge, die der Tiefenbildfolge entspricht, und dann, wenn n = 0, das Analysieren von Bildern von m Blöcken vor einer aktuellen Zeit, n Blöcken zur aktuellen Zeit und q Blöcken nach der aktuellen Zeit in einer Texturfolge, die einer Tiefenbildfolge entspricht, Folgendes umfasst:

Analysieren von Bildern von m Blöcken vor der aktuellen Zeit und q Blöcken nach der aktuellen Zeit in der Texturfolge, die der Tiefenbildfolge entspricht; und
gewichtetes Verarbeiten eines Tiefenbildes zur aktuellen Zeit gemäß den Eigenschaften der Texturfolge zur Korrektur unter Verwendung von r Blöcken vor der aktuellen Zeit und s Blöcken nach der aktuellen Zeit in der Tiefenbildfolge gemäß $D'_{nt} = w_{nt}D_{nt} + \sum_{i=1}^{r} w_{rit}D_{rit} + \sum_{j=1}^{s} w_{sjt}D_{sjt}$ , wobei $D'_{nt}$ eine Tiefe des verarbeiteten Bereichs des Tiefenbildes zur aktuellen Zeit nach der Korrektur ist, $D_{nt}$ eine Tiefe des verarbeiteten Bereichs des Tiefenbildes zur aktuellen Zeit vor der Korrektur ist, $D_{rit}$ eine Tiefe, die einem gewichteten Bereich eines i-ten Blocks in den r Blöcken vor dem Tiefenbild zur aktuellen Zeit entspricht, ist, $D_{sjt}$ eine Tiefe, die einem gewichteten Bereich eines j-ten Blocks in den s Blöcken nach dem Tiefenbild zur aktuellen Zeit entspricht, ist, die Gewichte $w_{nt}$, $w_{rit}$ und $w_{sjt}$ dynamisch entsprechend der Amplitude des Bewegungsvektors des Bereichs bestimmt werden, wobei m = 0, 1, 2, ...; q = 0, 1, 2, ...; r = 0, 1, 2, ...; s = 0, 1, 2, ...; und die Blöcke m, q, r und s kontinuierliche Blöcke oder diskontinuierliche Blöcke sind, wobei diskontinuierliche Blöcke Blöcke, in denen mindestens ein Block übersprungen wurde, sind und m + n + q ≥ 2 und r + s ≥ 1.

2. Verfahren zum Verarbeiten einer Tiefenbildfolge nach Anspruch 1, wobei das gewichtete Verarbeiten des Tiefenbildes zur aktuellen Zeit gemäß den Eigenschaften der Texturfolgen Folgendes umfasst:
Teilen des zu verarbeitenden Tiefenbildes bei der aktuellen Zeit in den Pixelbereich, der korrigiert werden muss, und einen Pixelbereich, der nicht korrigiert werden muss.

3. Verfahren zum Verarbeiten einer Tiefenbildfolge nach Anspruch 2, wobei für den Pixelbereich, der korrigiert werden muss, eine gewichtete Verarbeitung zur Korrektur unter Verwendung von Tiefenbildern der r Blöcke vor der aktuellen Zeit und der s Blöcke nach der aktuellen Zeit durchgeführt wird und die r Blöcke und die s Blöcke kontinuierliche Blöcke oder diskontinuierliche Blöcke, in denen mindestens ein Block übersprungen wurde, sind, wobei r, s = 0, 1, 2, ..., und r + s ≥ 1.

4. Vorrichtung zum Verarbeiten einer Tiefenbildfolge, die ein texturfolgencharakteristisches Analysemodul (804) und ein Parameterkorrekturmodul (806) enthält, wobei
das texturfolgencharakteristische Analysemodul (804) konfiguriert ist, Bilder von m Blöcken vor einer aktuellen Zeit, n Blöcken zur aktuellen Zeit, wobei n = 0 oder 1, und q Blöcken nach der aktuellen Zeit in einer Texturfolge, die einer Tiefenbildfolge entspricht, zu analysieren, um charakteristische Eigenschaften der Texturfolge zur erhalten, wobei das Erhalten der charakteristischen Eigenschaften der Texturfolge Folgendes umfasst: Analysieren von Bewegungsinformationen der Texturfolge und Extrahieren der Bewegungsinformationen als einen charakteristischen Wert und wobei dann, wenn n = 1, das Analysieren von Bildern von m Blöcken vor einer aktuellen Zeit, n Blöcken zur aktuellen Zeit und q Blöcken nach der aktuellen Zeit in einer Texturfolge, die einer Tiefenbildfolge entspricht, Folgendes umfasst:

Analysieren von Bildern von m Blöcken vor der aktuellen Zeit, des Blocks zur aktuellen Zeit und q Blöcken nach der aktuellen Zeit in der Texturfolge, die der Tiefenbildfolge entspricht, und dann, wenn n = 0, das Analysieren von Bildern von m Blöcken vor einer aktuellen Zeit, n Blöcken zur aktuellen Zeit und q Blöcken nach der aktuellen Zeit in einer Texturfolge, die einer Tiefenbildfolge entspricht, Folgendes umfasst: Analysieren von Bildern von m Blöcken vor der aktuellen Zeit und q Blöcken nach der aktuellen Zeit in der Texturfolge, die der Tiefenbildfolge entspricht; und

das Parameterkorrekturmodul (806) konfiguriert ist, die Parameter f, m, n, q, r, s und wi entsprechend einem die Texturfolge charakteristischen Wert und der Tiefenbildfolge zu korrigieren, wobei f = 1, 0, wobei f = 1 angibt, dass ein aktuelles Verarbeitungsmodul einen Algorithmus zum Verbessern der Zeitbereichskonsistenz der Tiefenbildfolge anwendet, und f=0 angibt, dass ein aktuelles Verarbeitungsmodul den Algorithmus zum Verbessern der Zeitbereichskonsistenz der Tiefenbildfolge nicht anwendet; m = 0, 1, 2, ..., und q = 0, 1, 2, ..., wobei m bzw. q die Anzahl von Blöcken in der Texturfolge vor und nach einer aktuellen Zeit angeben, auf die Bezug genommen wird, wenn der Verbesserungsalgorithmus angewandt wird; r = 0, 1, 2, ..., und s = 0, 1, 2, ..., wobei r bzw. s die Anzahl von Blöcken in der Tiefenbildfolge vor und nach der aktuellen Zeit angeben, auf die Bezug genommen wird, wenn der Verbesserungsalgorithmus angewandt wird; m + n + q $\geq$ 2 und r + s $\geq$ 1; und wi ein Gewicht von Blöcken, die m, n, q, r und s entsprechen, ist; und die korrigierten Parameter zum texturfolgencharakteristischen Analysemodul zurückzugeben, wobei der Algorithmus zum Verbessern der Zeitbereichskonsistenz der Tiefenbildfolge Folgendes umfasst: gewichtetes Verarbeiten eines Tiefenbildes zur aktuellen Zeit gemäß den Eigenschaften der Texturfolge zur Korrektur unter Verwendung von r Blöcken vor der aktuellen Zeit und s Blöcken nach der aktuellen Zeit in der Tiefenbildfolge gemäß $D'_{nt} = w_{nt}D_{nt} +$

$\sum_{i=1}^{r} w_{rit}D_{rit} + \sum_{j=1}^{s} w_{sjt}D_{sjt}$, wobei $D'_{nt}$ eine Tiefe des verarbeiteten Bereichs des Tiefenbildes zur aktuellen Zeit nach der Korrektur ist, $D_{nt}$ eine Tiefe des verarbeiteten Bereichs des Tiefenbildes zur aktuellen Zeit vor der Korrektur ist, $D_{rit}$ eine Tiefe, die einem gewichteten Bereich eines i-ten Blocks in den r Blöcken vor dem Tiefenbild zur aktuellen Zeit entspricht, ist, $D_{sjt}$ eine Tiefe, die einem gewichteten Bereich eines j-ten Blocks in den s Blöcken nach dem Tiefenbild zur aktuellen Zeit entspricht, ist und die Gewichte $w_{nt}$, $w_{rit}$ und $w_{sjt}$ dynamisch entsprechend der Amplitude des Bewegungsvektors des Bereichs bestimmt werden.

5. Vorrichtung zum Verarbeiten einer Tiefenbildfolge nach Anspruch 4, die ferner ein tiefenfolgencharakteristisches Analysemodul (906) enthält, wobei
das tiefenfolgencharakteristische Analysemodul (906) ferner konfiguriert ist, eine Tiefenbildfolge zu analysieren, um charakteristische Informationen der Tiefenbildfolge zu erhalten; und
das Parameterkorrekturmodul (908) konfiguriert ist, die Parameter f, m, n, q, r, s und wi entsprechend dem die Texturfolge charakteristischen Wert, dem die Tiefenbildfolge charakteristischen Wert und der Tiefenbildfolge zu korrigieren.

## Revendications

1. Procédé pour traiter une séquence d'images de profondeur, comprenant :

l'analyse d'images de m vues avant un moment actuel, de n vue au moment actuel, dans lequel n = 0 ou 1, et de q vues après le moment actuel dans une séquence de texture correspondant à une séquence d'images de profondeur, et l'extraction de caractéristiques de la séquence de texture, dans lequel l'extraction des caractéristiques de la séquence de texture comprend : l'analyse d'informations de mouvement de la séquence de texture, et l'extraction des informations de mouvement en tant que valeur de caractéristique, et dans lequel, lorsque n = 1, l'analyse d'images de m vues avant un moment actuel, de n vue au moment actuel, et de q vues après le moment actuel dans une séquence de texture correspondant à une séquence d'images de profondeur comprend : l'analyse d'images de m vues avant le moment actuel, de la vue au moment actuel, et de q vues après le moment actuel dans la séquence de texture correspondant à la séquence d'images de profondeur, et, lorsque n = 0, l'analyse d'images de m vues avant un moment actuel, de n vue au moment actuel, et de q vues après le moment actuel dans une séquence de texture correspondant à une séquence d'images de profondeur comprend : l'analyse d'images de m vues avant le moment actuel, et de q vues après le moment actuel dans la séquence de texture correspondant à la séquence d'images de profondeur ; et
le traitement pondéré d'une image de profondeur au moment actuel selon les caractéristiques de la séquence de texture pour la correction en utilisant r vues avant le moment actuel et s vues après le moment actuel dans la séquence d'images de profondeur selon :

$$D'_{nt} = w_{nt}D_{nt} + \sum_{i=1}^{r} w_{rit}D_{rit} + \sum_{j=1}^{s} w_{sjt}D_{sjt}$$

dans lequel $D'_{nt}$ est une profondeur de la région traitée de l'image de profondeur au moment actuel après la correction, $D_{nt}$ est une profondeur de la région traitée de l'image de profondeur au moment actuel avant la correction, $D_{rit}$ est une profondeur correspondant à une région pondérée d'une $i^{ème}$ vue dans les r vues avant l'image de profondeur au moment actuel, $D_{sjt}$ est une profondeur correspondant à une région pondérée d'une $j^{ème}$ vue dans les s vues après l'image de profondeur au moment actuel, les poids $w_{nt}$, $w_{rit}$ et $w_{sjt}$ sont dynamiquement déterminés selon l'amplitude du vecteur de mouvement de la région, dans lequel m = 0, 1, 2, ... ; q = 0, 1, 2, ... ; r = 0, 1, 2, ... ; s = 0, 1, 2, ... ; et les m, q, r, et s vues sont des vues continues ou des vues discontinues, dans lequel des vues discontinues sont des vues avec au moins une vue sautée, et où m + n + q ≥ 2, et r + s ≥ 1.

2. Procédé pour traiter une séquence d'images de profondeur selon la revendication 1, dans lequel le traitement pondéré de l'image de profondeur au moment actuel selon les caractéristiques de la séquence de texture comprend : la division de l'image de profondeur, au moment actuel, destinée à être traitée, en la région de pixel qui a besoin d'être corrigée et une région de pixel qui n'a pas besoin d'être corrigée.

3. Procédé pour traiter une séquence d'images de profondeur selon la revendication 2, dans lequel, pour la région de pixel qui a besoin d'être corrigée, le traitement pondéré est réalisé pour la correction en utilisant des images de profondeur des r vues avant le moment actuel et des s vues après le moment actuel ; et les r vues et les s vues sont des vues continues ou des vues discontinues avec au moins une vue sautée, où r, s = 0, 1, 2, ..., et r+s≥1.

4. Dispositif pour traiter une séquence d'images de profondeur, comprenant un module d'analyse de caractéristique de séquence de texture (804) et un module de correction de paramètre (806), dans lequel le module d'analyse de caractéristique de séquence de texture (804) est configuré pour analyser des images de m vues avant un moment actuel, de n vue au moment actuel, dans lequel n = 0 ou 1, et de q vues après le moment actuel dans une séquence de texture correspondant à une séquence d'images de profondeur, afin d'obtenir des informations de caractéristiques de la séquence de texture, dans lequel l'obtention des informations de caractéristiques de la séquence de texture comprend : l'analyse d'informations de mouvement de la séquence de texture, et l'extraction des informations de mouvement en tant que valeur de caractéristique, et dans lequel, lorsque n = 1, l'analyse d'images de m vues avant un moment actuel, de n vue au moment actuel, et de q vues après le moment actuel dans une séquence de texture correspondant à une séquence d'images de profondeur comprend : l'analyse d'images de m vues avant le moment actuel, de la vue au moment actuel, et de q vues après le moment actuel dans la séquence de texture correspondant à la séquence d'images de profondeur, et, lorsque n = 0, l'analyse d'images de m vues avant un moment actuel, de n vue au moment actuel, et de q vues après le moment actuel dans une séquence de texture correspondant à une séquence d'images de profondeur comprend : l'analyse d'images de m vues avant le moment actuel, et de q vues après le moment actuel dans la séquence de texture correspondant à la séquence d'images de profondeur ; et le module de correction de paramètre (806) est configuré pour corriger des paramètres f, m, n, q, r, s, et wi selon une valeur de caractéristique de séquence de texture et la séquence d'images de profondeur, dans lequel f = 1, 0, où f = 1 indique qu'un module de traitement actuel adopte un algorithme pour améliorer la constance de domaine temporel de la séquence d'images de profondeur, et f = 0 indique que le module de traitement actuel n'adopte pas l'algorithme pour améliorer la constance de domaine temporel de la séquence d'images de profondeur ; m = 0, 1,2, ..., et q = 0, 1, 2, ..., où m et q indiquent respectivement le nombre de vues dans la séquence de texture avant et après un moment actuel auxquelles référence est faite lorsque l'algorithme d'amélioration est adopté; r = 0, 1, 2, ..., et s = 0, 1, 2, ..., où r et s indiquent respectivement le nombre de vues dans la séquence d'images de profondeur avant et après le moment actuel auxquelles référence est faite lorsque l'algorithme d'amélioration est adopté ; m + n + q ≥ 2, et r + s ≥ 1 ; et wi est un poids de vues correspondant à m, n, q, r, et s ; et pour renvoyer les paramètres corrigés au module d'analyse de caractéristique de séquence de texture, dans lequel l'algorithme pour améliorer la constance de domaine temporel de la séquence d'images de profondeur comprend : le traitement pondéré d'une image de profondeur au moment actuel selon les caractéristiques de la séquence de texture pour la correction en utilisant r vues avant le moment actuel et s vues après le moment actuel dans la séquence d'images de profondeur selon

$$D'_{nt} = w_{nt}D_{nt} + \sum_{i=1}^{r} w_{rit}D_{rit} + \sum_{j=1}^{s} w_{sjt}D_{sjt}$$

dans lequel $D'_{nt}$ est une profondeur de la région traitée de l'image de profondeur au moment actuel après la correction, $D_{nt}$ est une profondeur de la région traitée de l'image de profondeur au moment actuel avant la correction, $D_{rit}$ est

une profondeur correspondant à une région pondérée d'une $i^{\text{ème}}$ vue dans les r vues avant l'image de profondeur au moment actuel, $D_{sjt}$ est une profondeur correspondant à une région pondérée d'une $j^{\text{ème}}$ vue dans les s vues après l'image de profondeur au moment actuel, les poids $w_{nt}$, $w_{rit}$ et $w_{sjt}$ sont dynamiquement déterminés selon l'amplitude du vecteur de mouvement de la région.

5. Dispositif pour traiter une séquence d'images de profondeur selon la revendication 4, comprenant en outre un module d'analyse de caractéristique de séquence de profondeur (906), dans lequel
le module d'analyse de caractéristique de séquence de profondeur (906) est en outre configuré pour analyser une séquence d'images de profondeur, afin d'obtenir des informations de caractéristique de la séquence d'images de profondeur ; et
le module de correction de paramètre (908) est configuré pour corriger les paramètres f, m, n, q, r, s, et wi selon la valeur de caractéristique de séquence de texture, la valeur de caractéristique de séquence d'images de profondeur, et la séquence d'images de profondeur.

FIG. 1

FIG. 2

Time

Texture sequence ......

Depth sequence ......

FIG. 3

Time

Texture sequence ......

Depth sequence ...

FIG. 4

Time

Texture sequence

FIG. 5

Motion vector of the region to be processed

m frames

Motion vector of the region to be processed

r' frames

q frames

s' frames

Depth sequence

r frames

s frames

Current time

FIG. 6

602

604

Corresponding texture sequence

Buffer

Characteristic analysis module

Characteristic value

606

602

Depth sequence to be processed

Buffer

Characteristic processing and correction module

Output depth sequence

Correction result

Optional branch

Relevant parameters (from a code stream)

m,n,q

702

Corresponding texture sequence

Buffer

Texture sequence characteristic analysis module

704

fw$_j$

r,s

Characteristic value

f

702

Depth sequence to be processed

Buffer

706

Depth sequence characteristic analysis module

Characteristic value

Characteristic processing and correction module

Output depth sequence

708

Correction result

Optional branch

FIG. 7

FIG. 8

FIG. 9

EP 2 391 135 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A Novel Frame Concealment Method for Depth Maps Using Corresponding Colour Motion Vectors. **HEWAGE, C.T.E.R. et al.** 3dtv conference. IEEE, 2008, 149-152

- Frame concealment algorithm for stereoscopic video using motion vector sharing. **HEWAGE, C.T.E.R. et al.** Multimedia and Expo. IEEE, 2008, 485-488